(19) Europäisches Patentamt
European Patent Office
Office européen des brevets

(11) **EP 2 731 408 A1**

(12) **EUROPEAN PATENT APPLICATION**

(43) Date of publication:
**14.05.2014 Bulletin 2014/20**

(51) Int Cl.:
*H05B 33/08* (2006.01)     *H05B 37/02* (2006.01)

(21) Application number: **13181484.0**

(22) Date of filing: **23.08.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.11.2012 JP 2012247942**
**02.07.2013 JP 2013138991**

(71) Applicant: **Kabushiki Kaisha Toshiba**
**Tokyo 105-8001 (JP)**

(72) Inventors:
• **Imai, Yoshie**
**Tokyo, 105-8001 (JP)**
• **Ishiwata, Tomoko**
**Tokyo, 105-8001 (JP)**
• **KANEKO, Toshimitsu**
**Tokyo, 105-8001 (JP)**

(74) Representative: **HOFFMANN EITLE**
**Patent- und Rechtsanwälte**
**Arabellastrasse 4**
**81925 München (DE)**

(54) **Control apparatus and illumination apparatus**

(57)     According to an embodiment, a control apparatus (100) includes an identification unit (120) and a derivation unit (130). The identification unit (120) is configured to identify an attribute of an object included in image data. The derivation unit (130) is configured to derive a combination of at least two types of light sources (2) and lighting rates of the light sources (2), based on the identified attribute of the object, the lights having different spectral power distributions.

# FIG.1

EP 2 731 408 A1

**Description**

FIELD

Embodiments described herein relate generally to a control apparatus and an illumination apparatus.

BACKGROUND

Conventionally, there is known a technique of allowing an object illuminated by a light source to be shown to be vivid by controlling light of the light source. In an aspect of the technique, the light is controlled according to color components distributed on an image obtained by capturing an image of an illuminating area, so that the color of the object can be shown to be more vivid.

In general, a human has a tendency of memorizing a color of an object more vividly than the real color thereof. Therefore, in the case of controlling the light, the color of the illuminated object is configured to be shown to be more vivid. However, even in the case of objects having similar color, for example, in the case of an orange-colored fruit and an orange-color woolen yarn, a color range of the color which is shown to be preferred by a user is different among the objects.

BRIEF DESCRIPTION OF THE DRAWINGS

FIG. 1 is a block diagram illustrating a configuration of a control apparatus and an illumination apparatus according to a first embodiment;
FIG. 2 is a diagram illustrating a relation between chroma of the objects and evaluation values;
FIG. 3 is a flowchart illustrating a procedure of whole processes according to the first embodiment;
FIG. 4 is a block diagram illustrating a configuration of a control apparatus and an illumination apparatus according to a second embodiment;
FIG. 5 illustrates illumination by a light source according to the second embodiment;
FIG. 6 is a flowchart illustrating a procedure of whole processes according to the second embodiment;
FIG. 7 is a block diagram illustrating a configuration of a control apparatus and an illumination apparatus according to a third embodiment;
FIGS. 8A to 8C each illustrates a logical sum of spectra according to the third embodiment;
FIG. 9 is a flowchart illustrating a procedure of whole processes according to the third embodiment;
FIG. 10 is a block diagram illustrating a configuration of a control apparatus and an illumination apparatus according to a fourth embodiment;
FIG. 11 is a diagram illustrating a relation between chroma of the objects and evaluation values in the case where correlated color temperatures are different;
FIG. 12 is a diagram illustrating an arbitrary color range where the color can be accepted as the same color by a human; and
FIG. 13 is a flowchart illustrating a procedure of whole processes according to the fourth embodiment.

DETAILED DESCRIPTION

According to an embodiment, a control apparatus includes an identification unit and a derivation unit. The identification unit is configured to identify an attribute of an object included in image data. The derivation unit is configured to derive a combination of at least two types of light sources and lighting rates of the light sources, based on the identified attribute of the object, the light sources having different spectral power distributions.

First Embodiment

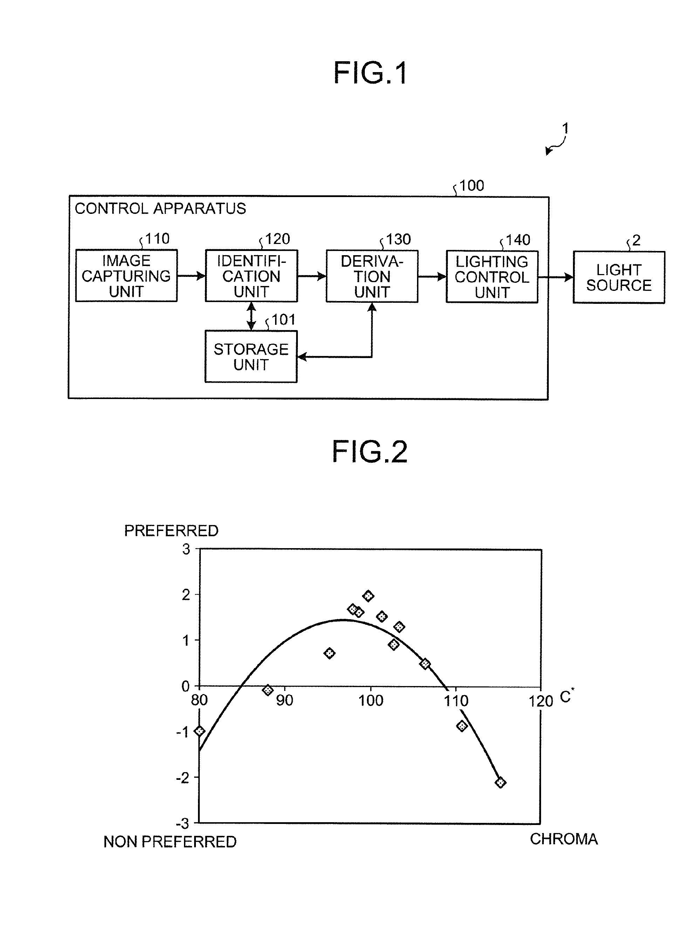

FIG. 1 is a block diagram illustrating an example of a configuration of a control apparatus and an illumination apparatus according to a first embodiment. As illustrated in FIG. 1, an illumination apparatus 1 is configured to include a control apparatus 100, and a light source 2. The control apparatus 100 is configured to include a storage unit 101, an image capturing unit 110, an identification unit 120, a derivation unit 130, and a lighting control unit 140 and is connected to the light source 2 in a wired or wireless manner. The control apparatus 100 may also function as a remote controller which controls light of the light source 2.

The light source 2 emits at least two types of lights having different spectral power distributions under the control of the lighting control unit 140. The at least two types of lights having different spectral power distributions denote that two types or more of illumination light beams have different spectral characteristics. The object illuminated by the light source 2 is captured by the image capturing unit 110. In addition, the light source 2 illuminates the object with arbitrary lights in initial lighting. First, the light source 2 is a ceiling light lamp employing a light emitting diode (LED), a fluorescent lamp, an organic electro-luminescence (EL) illumination, or the like.

The image capturing unit 110 is an image sensor that captures an image of an object illuminated by the light source 2 to generate image data. The image capturing unit 110 outputs the generated image data to the identification unit 120. The image capturing unit 110 performs image capturing every predetermined time interval or at the time that the object illuminated by the light source 2 is changed. In the case where the image capturing is performed at the time when the object illuminated by the light source 2 is changed, the image capturing unit 110 is an image sensor having a movement detecting function.

The identification unit 120 identifies the attribute of the object included in the image data generated by the image capturing unit 110. More specifically, the identification unit 120 extracts feature values such as edge, a gradient histogram, and a color histogram from the image data and identifies the attribute of the object included in the image data by using a statistical identification method. In the attribute identification, an attribute identification dictionary is used for identifying the attributes. The storage unit 101 stores the attribute identification dictionary. The feature values for identifying the objects with respect to the attributes of the objects are registered in the attribute identification dictionary.

The attribute of the object registered in the attribute identification dictionary is, for example, an attribute of an object having a "memory color". It is found that a skin color of a familiar person, green of leaves, a food or the like has a memory color which is commonly felt by many persons. The memory color is not necessarily coincident with a color of the real object, and the saturation of the memory color has a tendency to be higher than an actually measured value thereof. In addition, like the case of plants, the hue may be different. With respect to the object having the memory color, there exists a color which a human feels preferred when the human sees the object.

FIG. 2 is a diagram illustrating an example of a relation between chroma of the objects and evaluation values. In the example of FIG. 2, a relation between the chroma of an orange as a fruit and the evaluation value is illustrated. The vertical axis denotes the evaluation value expressed by "preferred" and "not preferred", and the horizontal axis denotes the chroma which is vividness. In addition, the "preferable" state used as the evaluation value is a state where a food is "likely to be delicious" or "very fresh" or a state where a person is "very healthy". In addition, in FIG. 2, the evaluation value is expressed by a quadratic curve and an approximated quadratic curve. As illustrated in FIG. 2, with respect to the orange as a fruit, the degree of preference is increased as the chroma is increased, and if the chroma reaches a certain level or more, the degree of preference is decreased. In other words, it can be understood from FIG. 2 that somewhat vivid color is evaluated to be "preferred", whereas too excessively vivid color is evaluated to be "not preferred".

In addition, in many cases, with respect to the object having a memory color, a range of the colorimetric value where a human feels preferred may be narrow. Therefore, the object having a memory color is registered in the attribute identification dictionary, so that illumination lights may be set based on illumination control parameters which are preset with respect to the object. For example, a range of the colorimetric value (in the example of FIG. 2, a range of chroma of 90 to 105), where the evaluation value of the preference is larger than "1" and which is obtained from the relation between the chroma of the object and the evaluation value, is stored in the storage unit 101 as a range where object's color is reproduced.

In addition, although the relation between the chroma of the objects and the evaluation values is expressed by using the chroma of the objects as the colorimetric value in the example of FIG. 2, the item stored in the storage unit 101 may be any one of colorimetric values such as brightness, lightness, hue, chromaticity, and a combination of two or more thereof may be used. In addition, the attributes may be registered according to types of objects such as "apple" and "orange", or may e registered according to categories such as "red fruit" and "orange-colored fruit". In addition, the attributes may be classified and registered according to species of fruits or the like.

In the case where the identification unit 120 can identify the attribute of the object with reference to an attribute identification dictionary, the identification unit 120 outputs information on the identified attribute of the object to the derivation unit 130. On the other hand, in the case where the identification unit 120 cannot identify the attribute of the object, the identification unit 120 outputs a message indicating that the object cannot be identified to the derivation unit 130.

The derivation unit 130 derives a combination of the light sources 2 and lighting rates based on the attribute of the object identified by the identification unit 120. More specifically, if the derivation unit 130 receives information on the attribute of the object identified by the identification unit 120, the derivation unit 130 derives the combination and lighting rates of the light sources 2 based on at least one color range where the color of the object illuminated by the light sources 2 is reproduced and spectral reflectance and a colorimetric value corresponding to the attribute of the object. The reproduced color range and the spectral reflectance and the colorimetric value corresponding to the attribute of the object are stored in the storage unit 101. Next, the derivation unit 130 outputs the derived combination of the light sources 2 and the lighting rates to the lighting control unit 140.

Herein, in the case where a color range where the color of the illuminated object is reproduced is defined as a CIELAB color space, the ranges of the tristimulus values are calculated. In addition, any color space that can be finally converted to the tristimulus values X, Y, and Z may be used as the reproduced color range. In the embodiment, the example of using the CIELAB color space is described.

If a colorimetric value in the CIELAB color space is denoted by ($L^*$, $a^*$, $b^*$), the relation between the tristimulus values X, Y, and Z is expressed by Equation (1).

$$
\begin{aligned}
L^* &= 116f\!\left(Y/Yn\right) - 16 \\
a^* &= 500\left\{ f\!\left(X/Xn\right) - f\!\left(Y/Yn\right) \right\} \\
b^* &= 200\left\{ f\!\left(Y/Yn\right) - f\!\left(Z/Zn\right) \right\}
\end{aligned}
\tag{1}
$$

Herein, the function f(X/Xn) is expressed by Equation (2). In addition, the function f(Y/Yn) and the function f(Z/Zn) are also obtained in a similar manner.

$$
\begin{aligned}
f\!\left(X/Xn\right) &= \left(X/Xn\right)^{1/3} & X/Xn &> 0.008856 \\
f\!\left(X/Xn\right) &= 7.787(X/Xn) + 16/116 & X/Xn &\leq 0.008856
\end{aligned}
\tag{2}
$$

Next, the tristimulus values X, Y, and Z are obtained by Equation (3) using the spectral reflectance R(λ) of an object, the spectral power distribution P(λ) of an illumination light beam, and the color-matching function.

$$
\begin{aligned}
X &= k \int_{vis} R\!\left(\lambda\right) \cdot P\!\left(\lambda\right) \cdot \overline{x}\!\left(\lambda\right) d\lambda \\
Y &= k \int_{vis} R\!\left(\lambda\right) \cdot P\!\left(\lambda\right) \cdot \overline{y}\!\left(\lambda\right) d\lambda \\
Z &= k \int_{vis} R\!\left(\lambda\right) \cdot P\!\left(\lambda\right) \cdot \overline{z}\!\left(\lambda\right) d\lambda
\end{aligned}
\tag{3}
$$

where $\overline{x}(\lambda)$, $\overline{y}(\lambda)$, $\overline{z}(\lambda)$ represent color matching functions.

Herein, k is an integer and is expressed by Equation 4 with respect to a color of a general object. In addition, integral $\int_{vis}$ is taken over a wavelength range of visible light.

$$
k = 100 \Big/ \int_{vis} P\!\left(\lambda\right) \cdot \overline{y}\!\left(\lambda\right) d\lambda
\tag{4}
$$

In this manner, the spectral power distribution P(λ) is calculated based on the combination and the lighting rates of the light sources 2. If the spectral power distribution of the lights constituting the combinable lights of the light sources 2, the spectral reflectance R(λ) of the object, and the tristimulus values X, Y, and Z are known, the selectable spectral power distribution P(λ) can be obtained, and at this time, the combination and lighting rates of the light sources 2 can also be calculated. In addition, in the case where plural combinations of the spectral power distributions P(λ) are considered, such a new condition as low power consumption is set, so that the corresponding combination of the light sources 2 and lighting rates may be derived.

In addition, in the case where a message indicating that the attribute of the object cannot be identified by the identification unit 120 is output, the derivation unit 130 reads setting values (hereinafter, referred to as default setting values) of a predetermined combination and lighting rates of the light sources 2 which are pre-set for the objects which are not registered in the attribute identification dictionary from the storage unit 101 and outputs the default setting values to the lighting control unit 140. The light emitted from the light source 2 with the default setting values may be so-called white light, and the correlated color temperature thereof is arbitrary. In general, it is understood that the visible color of the object illuminated by the light of the sun, which is natural light, or the light beams from an electric bulb is preferable. Therefore, in order to obtain the visible color of the object illuminated by the light sources 2 with the default setting values so as to be close to the visible color of the object illuminated by an electric bulb or the sun, it is preferable that the general color rendering index Ra be "80" or more. In addition, in order to show the object to be vivid, it is preferable that the color gamut area ratio $G_a$ be in a range of from "100" to "140". However, if the color gamut area ratio $G_a$ is too high, the object may have a possibility that the object is shown to be too much vivid. Therefore, it is preferable that the color gamut area ratio $G_a$ be "140" or less.

The color gamut area ratio $G_a$ is expressed by Equation (5) .

$$G_a = \frac{\sum_{i=1}^{8} \left( a^*_{k,i-1} b^*_{k,i} - b^*_{k,i-1} a^*_{k,i} \right)}{\sum_{i=1}^{8} \left( a^*_{r,i-1} b^*_{r,i} - b^*_{r,i-1} a^*_{r,i} \right)} \cdot 100 \tag{5}$$

In Equation (5), $a^*_{r,i} b^*_{r,i}$ denotes chromaticity of from 1 to 8 of the test-color samples of the Color Rendering Index calculation when the illumination is illuminated by the reference illuminant such as the sun and electric blub at the same correlated color temperature. In addition, in Equation (5), $a^*_{k,i} b^*_{k,i}$ denotes chromaticity of the test-color samples of the Color Rendering Index calculation under the real illuminant. Herein, although the color gamut area ratio in the CIELAB color space is illustrated, the color gamut area ratio in other spaces such as CIEW$^*$U$^*$V$^*$ and CIELUV may be used.

The lighting control unit 140 controls the light of the light sources 2 based on the combination and lighting rates of the light sources 2 that are derived by the derivation unit 130. In the control of the light of the light sources 2 by the lighting control unit 140, the control of the light of the light sources 2 which are optimized according to the attribute identified by the identification unit 120 can be performed. Therefore, the light sources 2 illuminate the object with the lights which implement vividness of colors which are considered to be preferred by a human.

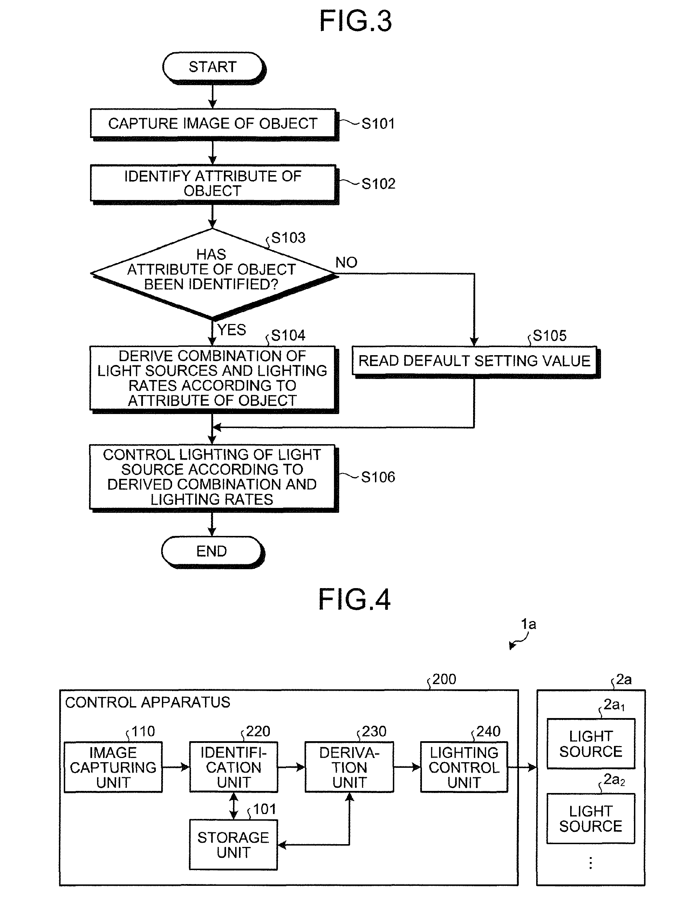

Next, a flow of whole processes according to a first embodiment will be described with reference to FIG. 3. FIG. 3 is a flowchart illustrating an example of a flow of whole processes according to the first embodiment.

As illustrated in FIG. 3, the image capturing unit 110 captures an image of an object illuminated by the light source 2 to generate image data (Step S101). The identification unit 120 extracts feature values of the object included in image data generated by image capturing unit 110 and obtains an attribute of the object corresponding to the extracted feature values with reference to an attribute identification dictionary to identify an attribute of the object (Step S102).

In the case where the attribute of the object is identified by the identification unit 120 (Yes in Step S103), the derivation unit 130 derives a combination of the light sources 2 and lighting rates based on the attribute of the object (Step S104). On the other hand, in the case where the attribute of the object cannot be identified by the identification unit 120 (No in Step S103), the derivation unit 130 reads a default setting value (Step S105). Next, the lighting control unit 140 controls lighting of the light sources 2 according to the combination and lighting rates of the light sources 2 that are derived by the derivation unit 130 (Step S106).

In the embodiment, the recognition of the object illuminated by the light sources 2 is performed, and the combination and lighting rates of the light sources 2 are derived so that a range of appropriate chroma for the object (for example, a range of chroma of which evaluation value including subjective evaluation is equal to or larger than a predetermined evaluation value) is obtained when the recognized object is illuminated by the light sources 2, and the light of the light sources 2 is controlled based on the combination and lighting rates of the light sources 2. As a result, according to the embodiment, the light sources 2 can illuminate with the lights which show the object to be preferred by the user.

In addition, in the embodiment, if the object illuminated by the light source 2 is not identified by the identification unit 120, the light of the light source 2 is controlled based on the combination and the lighting rates of the light sources 2 in which a general color rendering index Ra or a color gamut area ratio Ga is appropriately adjusted. As a result, according to the embodiment, the light sources 2 can illuminate the object, of which the range of a preferred color reproduced is not stored, with the light beams included within a range where the object is shown to be too much vivid.

In addition, in the embodiment, when the object illuminated by the light source 2 is changed, the change is detected by an image sensor, and the combination and lighting rates of the light sources 2 are derived based on the new attribute of the object. As a result, according to the embodiment, the light source 2 can illuminate the object with the lights which show the object to be preferred by the user according to the change of the object.

Second Embodiment

FIG. 4 is a block diagram illustrating an example of a configuration of a control apparatus and an illumination apparatus according to a second embodiment. In the second embodiment, the same components as those of the first embodiment are denoted by the same reference numerals, and the detailed description thereof will not be present. The functions, configurations, and processes of the second embodiment are the same as those of the first embodiment except for the below-described identification unit 220, derivation unit 230, lighting control unit 240, and light source 2a.

As illustrated in FIG. 4, an illumination apparatus 1a is configured to include a control apparatus 200 and the light source 2a. The control apparatus 200 is configured to include a storage unit 101, an image capturing unit 110, an identification unit 220, a derivation unit 230, and a lighting control unit 240 and is connected to the light source 2a in a wired or wireless manner. The light source 2a includes a plurality of light sources such as light source $2a_1$ and light source $2a_2$. Similarly to the first embodiment, the control apparatus 200 may also function as a remote controller which controls lighting of the light source 2a.

Each of the light sources in the light source 2a emits at least two types of lights having different spectral power distribution under the control of the lighting control unit 240. A plurality of objects captured by the image capturing unit 110 are illuminated by the light sources in the light source 2a, respectively. In other words, since a plurality of light sources according to the embodiment are arranged in the illumination apparatus 1a, each of the objects can be illuminated with different lights. For example, the light source 2a is a projection-type projector, or the like. In the embodiment, the case where a plurality of objects are illuminated by the light source 2a is will be exemplified in the description thereof.

The identification unit 220 identifies attributes of the objects included in the image data generated by the image capturing unit 110. The method of identifying the attributes of the objects by the identification unit 220 is the same as that of the first embodiment except for the positions of the plurality of the objects for identifying the attributes. In addition, in order to check the positions of the plurality of the objects, the identification unit 220 also detects coordinate positions of the objects in the image data thereof. In addition, the identification unit 220 outputs the coordinate positions of the objects in the image data thereof and information on the identified attributes of the objects to the derivation unit 230. In addition, if an unidentifiable object is included, the identification unit 220 outputs the coordinate position of the object and a message indicating that the object is unidentifiable to the derivation unit 230.

In addition, in the case of the use for illumination on products exhibited in a shop, since the arrangement of the illumination apparatus 1a and the positions of the illuminated objects are defined, coordinate positions of the objects in the image data thereof may be not detected. In this case of the use, information on the exhibition positions of the plurality of the objects is stored in advance. In addition, with respect to the illumination zone, since it is preferable to know as to which objects having a certain attribute to be arranged at which positions, the information on the positions may be detected by using arbitrary methods, for example, a method using an image capturing unit 110 having a position detection function, a method using a sensor for detecting the positions of the objects, and the like besides the above-described one.

The derivation unit 230 derives a combination and lighting rates of the light sources 2a for each of the objects based on the attributes of the objects identified by the identification unit 220. The method of deriving the combination and lighting rates of the light sources 2a by the derivation unit 230 is the same as that of the first embodiment except that the combination and lighting rates of the light sources 2a are derived for each of the plurality of objects. Next, the derivation unit 230 outputs the coordinate positions (position information) of the objects and the derived combination and lighting rates of the light sources 2a for each of the objects to the lighting control unit 240.

With respect to real position of the object, if the information of the coordinates is known, the position or size of the object in the image data can be obtained. Therefore, the real position of the object is obtained by converting the position and size of the object in the image data into the real position and size of the object based on the distance between the control apparatus 200 and the illumination apparatus 1a and the distance between the illumination apparatus 1a and the object. In addition, in the case of the illumination apparatus 1a where the control apparatus 200 and the light sources in the light source 2a are integrated, the position and size of the object in the image data may be converted into the real position and size of the object based on the distance between the illumination apparatus 1a and the object.

The lighting control unit 240 controls the light of the light sources in the light source 2a with the respect to the positions of the objects based on the combinations and lighting rates of the light sources 2a that are derived by the derivation unit 230. Therefore, each of the light sources in the light source 2a illuminates the corresponding object with the lights which implement vividness of colors which are considered to be preferred by a human.

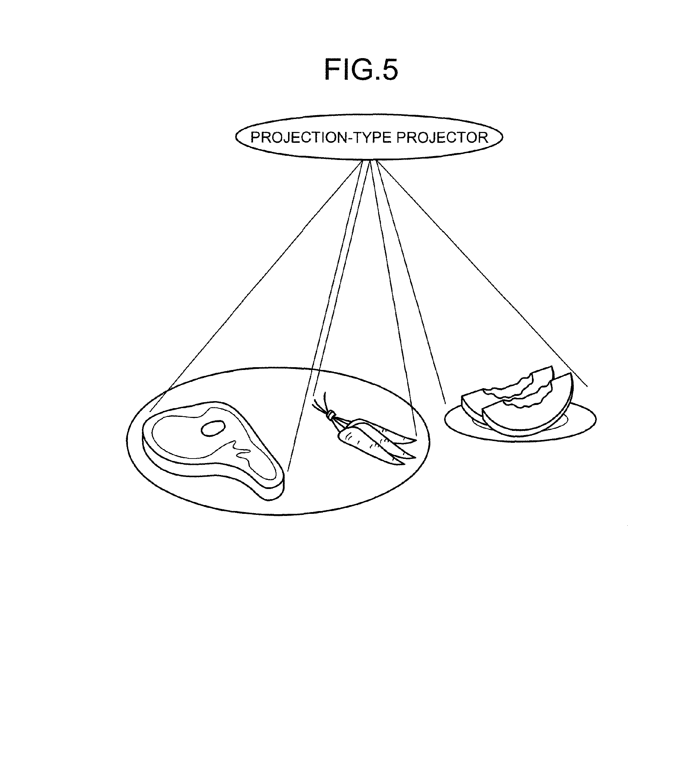

FIG. 5 illustrates illumination of the light source 2a according to the second embodiment. As illustrated in FIG. 5, the light source 2a which is a projection-type projector illuminates objects including fresh meat, ginseng, a dish with fresh meat and ginseng mounted thereon, a melon, a dish with a melon mounted thereon with very appropriate light beams by using the above-described process. In addition, in FIG. 5, fresh meat, ginseng, and melon are objects having memory colors. Similarly, dish is considered to be an object having no memory color. Therefore, the fresh meat, the ginseng, and the melon are registered in an attribute identification dictionary, and with respect to each of the objects having the memory colors. With respect to each of the objects having the memory colors, a reproduced color range or spectral reflectance of the object is stored in the storage unit 101. In the second embodiment, since the light sources in the light source 2a can illuminate the plurality of objects respectively with the appropriate illumination light beams for the objects, the plurality of illuminated objects can be shown preferably.

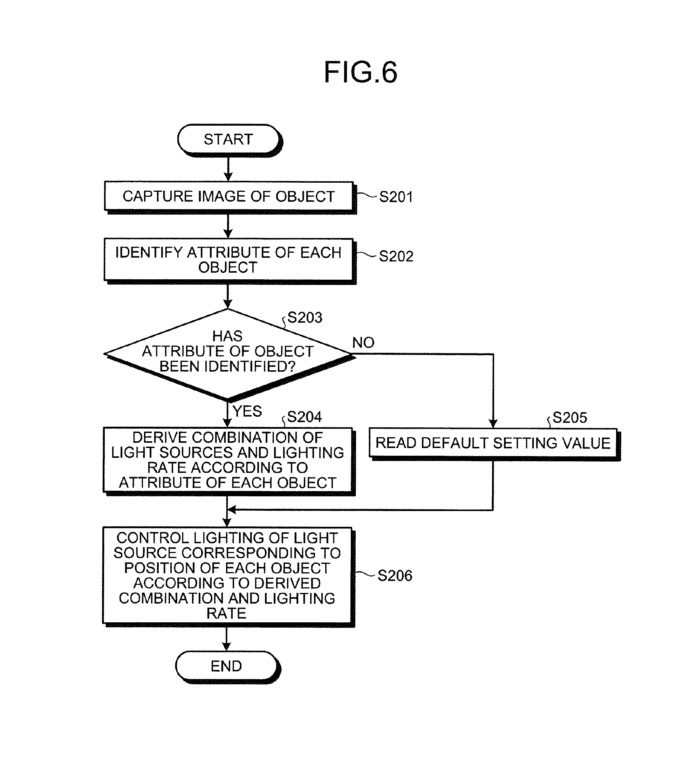

Next, a flow of whole processes according to a second embodiment will be described with reference to FIG. 6. FIG. 6 is a flowchart illustrating an example of a flow of whole processes according to the second embodiment.

As illustrated in FIG. 6, the image capturing unit 110 captures an image of a plurality of objects illuminated by the light source 2a to generate image data (Step S201). The identification unit 220 extracts feature values of each object included in the image data generated by image capturing unit 110 and obtains an attribute of the object corresponding to the extracted feature values with reference to an attribute identification dictionary to identify the attribute (Step S202). In addition, the identification unit 220 also detects coordinate positions of the objects in the image data thereof.

In the case where the attribute of the object is identified by the identification unit 220 (Yes in Step S203), the derivation unit 230 derives the combination and lighting rates of the light sources 2a that are based on the attribute of the object (Step S204). On the other hand, in the case where the attribute of the object cannot be identified by the identification unit 220 (No in Step S203), the derivation unit 230 reads a default setting value (Step S205). Next, the lighting control unit 240 controls the light of the light source 2a according to the positions of the objects and the combination and lighting rates that are derived by the derivation unit 230 (Step S206).

In the embodiment, when the plurality of objects which are illuminated by the light sources 2a respectively with the lights are recognized, the combinations and lighting rates are derived based on the attributes of the objects so that the range of the chroma appropriate for the objects is obtained, and the light of the light sources 2a can be controlled. As a result, according to the embodiment, the light source 2a can illuminate with the lights such that the user can see the plurality of objects favorably.

In addition, in the embodiment, if the illuminated object is not identified by the identification unit 220, the light of the light sources 2a is controlled based on the default setting value read from the storage unit 101. As a result, according to the embodiment, the light sources 2a can illuminate even the object, of which a preferred color range reproduced is not stored, with the lights are included within a range where the object is shown to be too much vivid.

In addition, in the embodiment, when the objects illuminated by the light source 2a are changed, the change is detected by an image sensor, and the combinations and lighting rates of the light sources 2a are derived based on the new attributes of the objects. As a result, according to the embodiment, the light source 2 can illuminate with the lights such that the user can see the objects favorably according to the change of the objects.

Third Embodiment

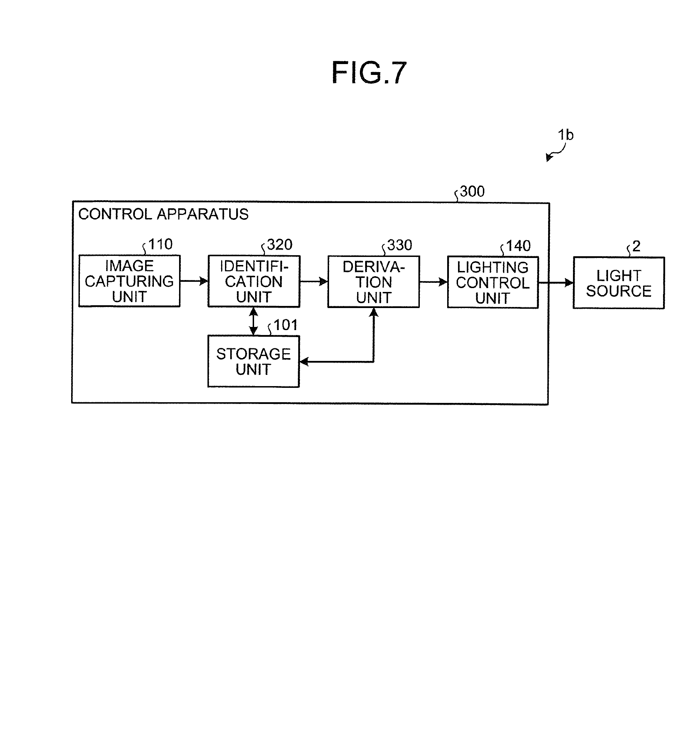

FIG. 7 is a block diagram illustrating an example of a configuration of a control apparatus and an illumination apparatus according to a third embodiment. In the third embodiment, the same components as those of the first embodiment are denoted by the same reference numerals, and the detailed description thereof may not be presented. The functions, configurations, and processes of the third embodiment are the same as those of the first embodiment except for the below-described identification unit 320 and derivation unit 330.

As illustrated in FIG. 7, an illumination apparatus 1b is configured to include a control apparatus 300 and a light source 2. The control apparatus 300 is configured to include the storage unit 101, the image capturing unit 110, an identification unit 320, a derivation unit 330, and the lighting control unit 140 and is connected to the light source 2 in a wired or wireless manner. Similarly to the first embodiment, the control apparatus 300 may also function as a remote controller which controls lighting of the light source 2. In addition, in the embodiment, an example where there is a plurality of objects illuminated by the light source 2 is described.

The identification unit 320 identifies attributes of objects included in image data generated by the image capturing unit 110. The attribute identification method of the identification unit 320 is the same as that of the first embodiment except that the attributes corresponding to the plurality of objects are identified and the light source 2 is controlled based on the attributes of the objects. Therefore, the identification unit 320 outputs information on the identified attributes of the objects to the derivation unit 330.

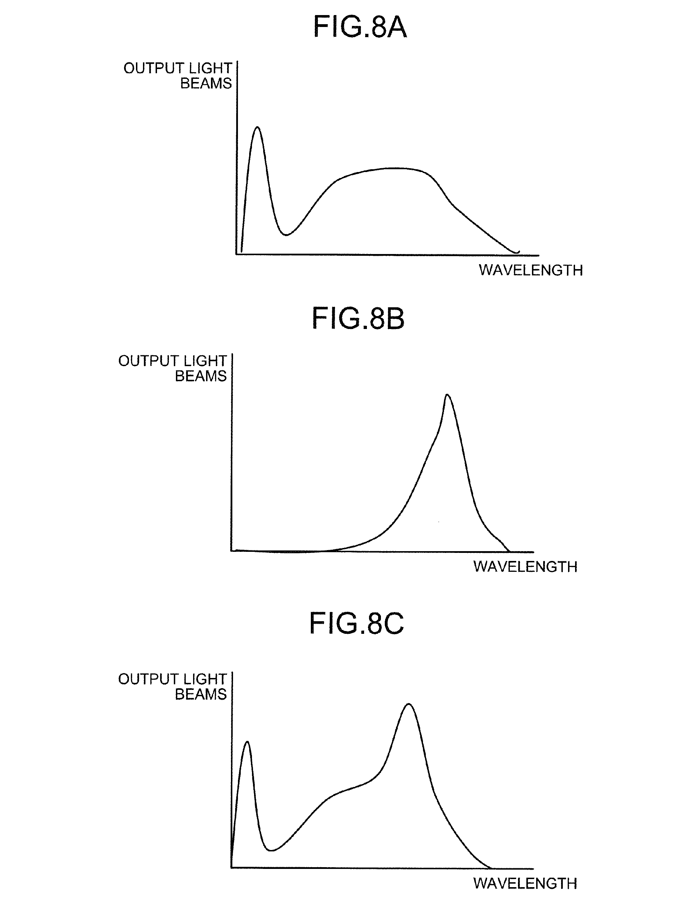

The derivation unit 330 obtains a logical sum of the spectra representing the intensity distributions of the output lights with respect to wavelengths, for the attributes of the objects identified by the identification unit 320, to derive the combination and lighting rates of the light sources 2. Herein, in the case where the objects are a "first object" and a "second object", the logical sum of the spectra will be described with reference to FIGS. 8A to 8C. FIGS. 8A to 8C are diagrams illustrating the example of logical sum of the spectra according to the third embodiment. In addition, in FIGS. 8A to 8C, vertical axes denote the intensities of output light beams; and horizontal axes denote the wavelengths thereof.

The derivation unit 330 calculates the logical sum of the spectrum (refer to FIG. 8A) of the output light beams with respect to the first object which is one of the illuminated objects and the spectrum (refer to FIG. 8B) of the output light beams with respect to the second object which is one of the illuminated objects. Therefore, as illustrated in FIG. 8C, the derivation unit 330 obtains spectra of output light beams with respect to the first and second objects. Next, the derivation unit 330 derives a combination and lighting rate of the light sources 2 corresponding to the obtain spectra.

However, in the case where the obtained spectrum is not included within a preferred color range, the derivation unit 330 adjusts the intensities of the output lights according to the priorities corresponding to the attributes of the objects to derive the combination and lighting rates of the light sources 2. With respect to the priority, higher priority is allocated to an attribute of an object which is to be shown to be particularly favorable.

More specifically, when the combination and lighting rates of the light sources 2 that are obtained by calculating the logical sum of the spectra are applied, the derivation unit 330 determines whether or not the spectra are included within a preferred color range with respect to the attributes of the objects. In addition, in the case where it is determined that some object is not included within a preferred color range due to the factor that some object is too vivid, the derivation unit 330 adjusts the combination and the lighting rates of the light sources 2 so that the object having an attribute of higher priority is included within the preferred color range. Next, the lighting control unit 140 controls light of the light source 2 based on the combination and the lighting rates of the light sources 2 that are derived by the derivation unit 330.

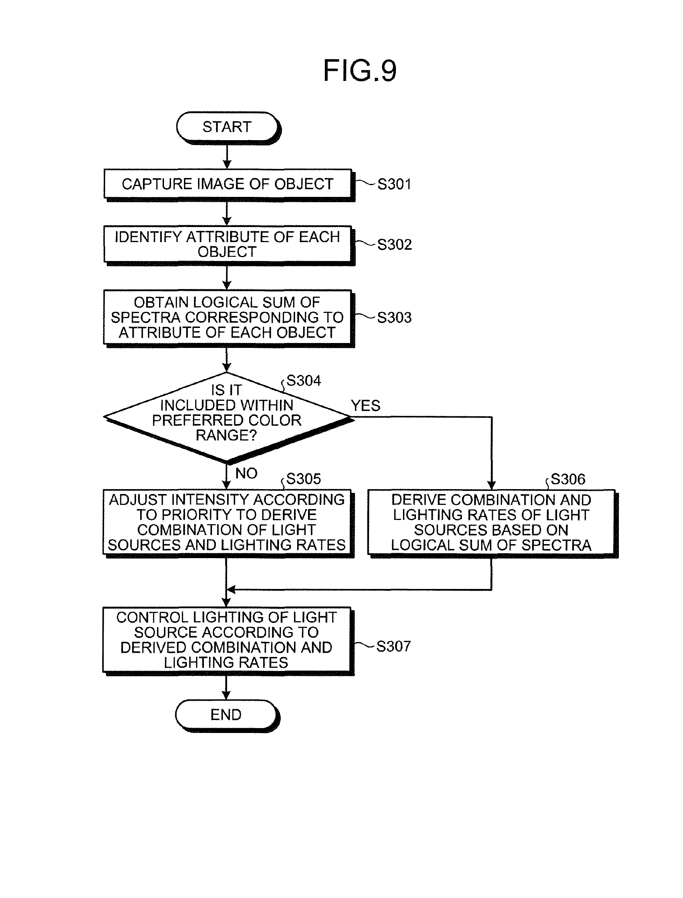

Next, a flow of whole processes according to a third embodiment will be described with reference to FIG. 9. FIG. 9 is a flowchart illustrating an example of a flow of whole processes according to the third embodiment.

As illustrated in FIG. 9, the image capturing unit 110 images a plurality of objects illuminated by the light source 2 to generate image data (Step S301). The identification unit 320 identifies attributes of the objects included in the image data generated by image capturing unit 110 (Step S302). The derivation unit 330 obtains a logical sum of spectra corresponding to the attributes of the objects identified by the identification unit 320 (Step S303).

At this time, in the case where it is determined that the obtained spectrum range is not included within the preferred color range (No in Step S304), the derivation unit 330 adjusts the intensities of the output lights according to the priority to derive the combination and lighting rates of the light sources 2 (Step S305). On the other hand, in the case where it is determined that the obtained spectrum range is included within the preferred color range (Yes in Step S304), the derivation unit 330 derives the combination and lighting rates of the light sources 2 corresponding to the obtained logical sum of the spectra (Step S306). Next, the lighting control unit 140 controls the light of the light source 2 based on the combination and the lighting rates of the light sources 2 that are derived by the derivation unit 330 (Step S307).

In the embodiment, the logical sum of the spectra with respect to the attributes of the objects which are illuminated by the light source 2 is obtained, and in the case where the obtained spectrum range is not included within a preferred color range, the intensities of the output lights are adjusted so that the object having an attribute of higher priority is shown to be preferable. As a result, according to the embodiment, with respect to the object having high priority, the light source 2 can illuminate with the lights such that the user can see the object favorably.

In addition, in the embodiment, when the object which is an object illuminated by the light source 2 is changed, the change is sensed by an image sensor, and a logical sum of spectra with respect to the attribute of the new object is obtained. In the case where the obtained spectrum range is not included within a preferred color range, the intensities of the output light beams are adjusted so that the object having an attribute of higher priority is shown to be preferable. As a result, according to the embodiment, the light source 2 can illuminate with the lights such that the user can favorably see the object having higher priority according to the change of the object.

Fourth Embodiment

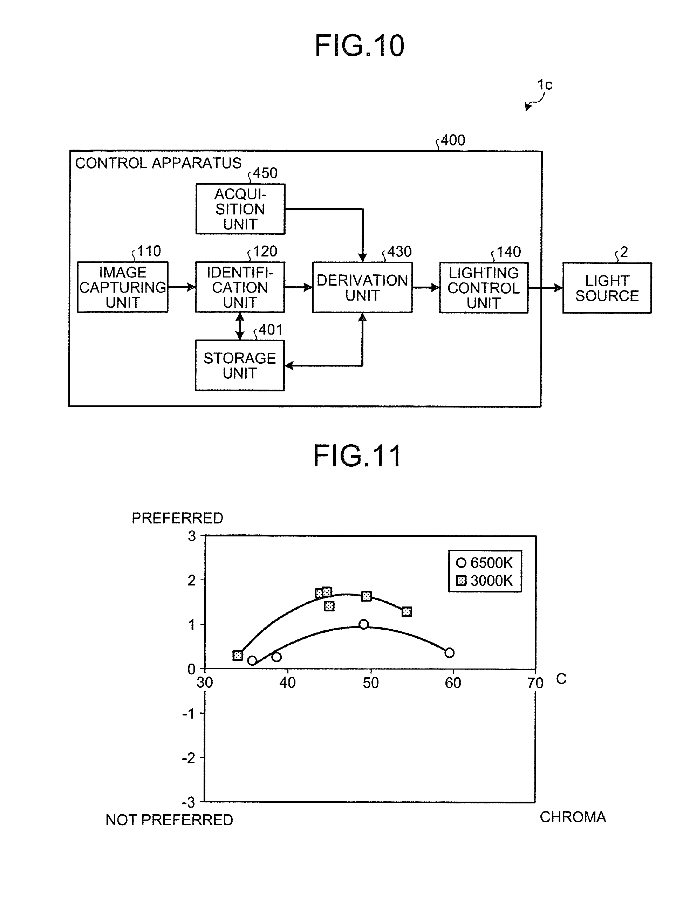

FIG. 10 is a block diagram illustrating an example of a configuration of a control apparatus and an illumination apparatus according to a fourth embodiment. In the fourth embodiment, the same components as those of the first embodiment are denoted by the same reference numerals, and the detailed description thereof will not be present. The functions, configurations, and processes of the fourth embodiment are the same as those of the first embodiment except for the below-described storage unit 401, derivation unit 430, and acquisition unit 450.

As illustrated in FIG. 10, an illumination apparatus 1c is configured to include a control apparatus 400 and a light source 2. The control apparatus 400 is configured to include a storage unit 401, an image capturing unit 110, an identification unit 120, a derivation unit 430, a lighting control unit 140, and an acquisition unit 450 and is connected to the light source 2 in a wired or wireless manner. Similarly to the first embodiment, the control apparatus 400 may also function as a remote controller which controls light of the light source 2.

The storage unit 401 stores an attribute identification dictionary. Feature values for identifying the objects with respect to the attributes of the objects are registered in the attribute identification dictionary. Similarly to the first embodiment, the attribute of the object registered in the attribute identification dictionary is, for example, an attribute of an object having a "memory color".

FIG. 11 is a diagram illustrating an example of a relation between chroma of the objects and evaluation values in the case where correlated color temperatures are different. In the example of FIG. 11, a relation between the chroma of an apple as a fruit and the evaluation value is illustrated in the case where the correlated color temperatures are different. The vertical axis denotes the evaluation value expressed by "preferred" and "not preferred", and the horizontal axis denotes the chroma which is vividness. In addition, similarly to the first embodiment, the "preferable" state used as the evaluation value is a state where a food is "likely to be delicious" or "very fresh" or a state where a person is "very healthy". In FIG. 11, the different correlated color temperatures are "3000 K" and "6500 K". In addition, in FIG. 11, the evaluation value at the correlated color temperature "3000 K" is illustrated by squares and an approximate curve of the squares. Similarly, the evaluation value at the correlated color temperature "6500 K" is illustrated by circles and an approximate curve of the circles.

Similarly to FIG. 2, in FIG. 11, with respect to the apple as a fruit, the degree of preference is increased as the chroma is increased, and if the chroma reaches a certain level or more, the degree of preference is decreased. In addition, in the case where the correlated color temperatures are different, scores which a human feels preferred are also different. With respect to the apple illustrated in FIG. 11, the score of feeling preferred of the case where the correlated color temperature is low is higher than the score of feeling preferred of the case where the correlated color temperature is high. In other words, in order to allow the object to be felt more preferred by using light of illumination, it is effective to change the correlated color temperature of the illumination as one of aspects.

Therefore, with respect to the attribute of the object, the evaluation value of the preference and the range of the chroma at an arbitrary correlated color temperature are further registered in the attribute identification dictionary stored in the storage unit 401. In the attribute identification dictionary, although it is ideal that the evaluation value of the preference and the range of the chroma are registered with respect to each of generally set correlated color temperatures, the relationship may be registered in a form of a mathematical formula in order to suppress an increase in capacity of the storage unit 401.

In addition, in the example of FIG. 11, the relation between the chroma of the objects and the evaluation values is expressed by using the chroma of the objects of CIE CAM 02 as the colorimetric value. Similarly to the first embodiment, the item stored in the storage unit 401 may be any one of colorimetric values of a color space such as brightness, lightness, hue, chromaticity, and a combination of two or more thereof may be used. Herein, the CIECAM 02 is known as a color appearance model and is expressed as a color space including environments such as the illuminant condition for example white point, correlated color temperature, and brightness. In addition, with respect to the color space, color adaptation is also taken into consideration.

The acquisition unit 450 acquires correlated color temperatures. More specifically, the acquisition unit 450 acquires a correlated color temperature set by user's manipulation using a remote controller or the like and a correlated color temperature set at a time interval considering a circadian rhythm or at a time interval using a timer. Next, the acquisition unit 450 outputs information on the acquired correlated color temperature to the derivation unit 430.

The derivation unit 430 derives a combination and lighting rates of the light sources 2 based on the correlated color temperature acquired by the acquisition unit 450 and the attribute of the object identified by the identification unit 120. More specifically, if the derivation unit 430 receives the information on the correlated color temperature acquired by the acquisition unit 450, the derivation unit 430 obtains a range of the correlated color temperature where a change thereof is not felt by a human or is accepted by a human.

As described above, the information on the correlated color temperature is acquired according to setting through user's manipulation or setting at a time interval. Therefore, when the attribute of the object is determined by the identification unit 120, the derivation unit 430 uses the information on the correlated color temperature acquired at this time. Difference in color may be expressed by color difference. In addition, the difference in color may be measured as a statistical distance such as a Euclidian distance in a color space and a weighted distance. With respect to the difference in color, there exists a color range where the color can be accepted as the same color by a human (refer to "Color One Point 2", by KOMATSUBARA Hitoshi, in 1993, Japanese Standards Association).

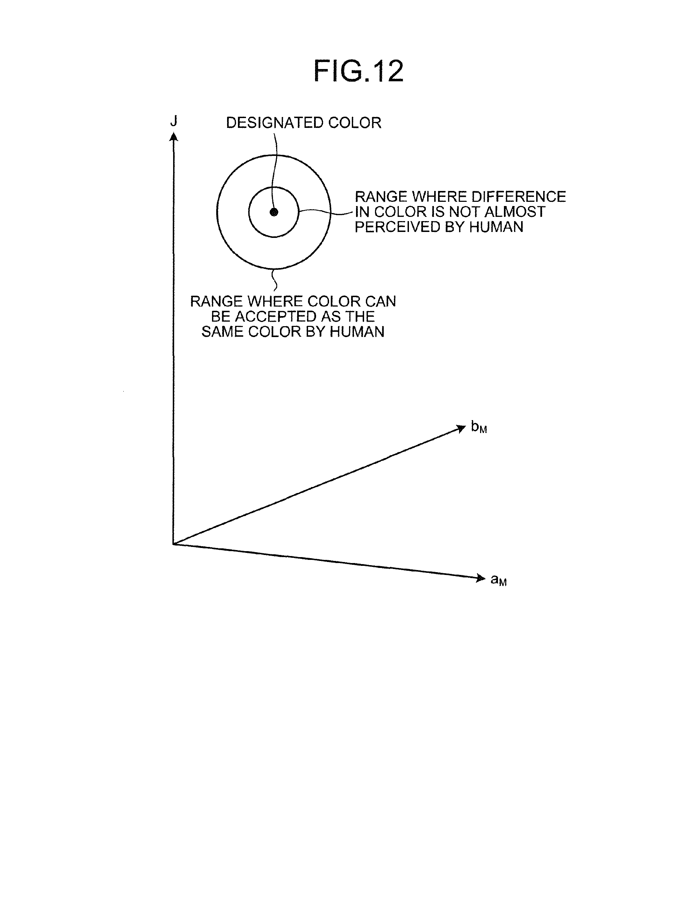

FIG. 12 is a diagram illustrating an example of an arbitrary color range where the color can be accepted as the same color by a human. FIG. 12 illustrates a schematic diagram of a CIECAM02 color space, where "J" denotes brightness and "aM" and "bM" denote chromaticity of colorfulness. As illustrated in FIG. 12, with respect to a designated arbitrary color, there exist a range where a difference in color is not almost perceived by a human and a range where a color can be accepted as the same color by a human. As a relationship between the ranges, the range where a difference in color is not almost perceived by a human is included in the range where a color can be accepted as the same color by a human.

For example, in the case where the objects are arranged in parallel, a radius of the range where a difference in color is not almost perceived by a human becomes color difference of about "1.2". On the other hand, in the case where the objects are separated from each other, a radius of the range where a difference in color is not almost perceived by a human becomes color difference of about "2.5". In addition, in the case where the object is observed at a time interval, a radius of the range where a difference in color is not almost perceived by a human becomes color difference of about "5.0". Namely, the range where a difference in color is not almost perceived by a human varies corresponding to the situation of human's observation of the object.

In addition, the degree of radius of the range where a difference in color is not almost perceived by a human may be set in advance as a sensing limit where the difference in color can be recognized or an allowable limit where the difference in color can be accepted or may be appropriately adjusted by the user. Namely, the derivation unit 430 obtains the range of the correlated color temperature which can be accepted by a human within the range of which the degree is set in advance or the range of which the degree is adjusted. In addition, since it is known that a reciprocal color temperature (mired) is higher than the correlated color temperature in terms of correlation to human perception, the above-described range may be set by using the reciprocal color temperature.

If the derivation unit 430 receives the attribute of the object information identified by the identification unit 120, the derivation unit 430 refers to the evaluation value of the preference and the range of the chroma at the time of an arbitrary correlated color temperature stored in the storage unit 401. Subsequently, the derivation unit 430 searches for or calculates the correlated color temperature having more preferable evaluation value within the range of the correlated color temperature which can be accepted by a human and uses the searched or calculated correlated color temperature as a correlated color temperature which be set. Next, the derivation unit 430 derives a combination and lighting rates of the light sources 2 from at least one of ranges of reproduced color when an object is illuminated with light by the light source 2, spectral reflectance corresponding to the attribute of the object, and a colorimetric value at the correlated color temperature. The range of reproduced color, the spectral reflectance corresponding to the attribute of the object, and colorimetric value are stored in the storage unit 401. The derivation unit 430 outputs the derived combination of the light sources 2 and the lighting rates to the lighting control unit 140. The calculation method in the derivation unit 430 is the same of that of the derivation unit 130 according to the first embodiment.

In addition, the color Gamut area ratio Ga and the general color rendering index Ra described in the first embodiment vary according to the correlated color temperature. For this reason, in the fourth embodiment, appropriate ranges of the color Gamut area ratio Ga and the general color rendering index Ra corresponding to the correlated color temperature are stored in the storage unit 401. Accordingly, the derivation unit 430 receives the range of the color Gamut area ratio Ga or the general color rendering index Ra stored in the storage unit 401, so that the derivation unit 430 can derive a more appropriate combination and lighting rates of the light sources 2 in the embodiment employing the correlated color temperature. In addition, the color Gamut area ratio Ga and the general color rendering index Ra may be set to the following values. Namely, the color Gamut area ratio Ga or the general color rendering index Ra may be set to a value corresponding to the correlated color temperature acquired by the acquisition unit 450 or a value corresponding to the correlated color temperature which is considered more preferable in the range of the correlated color temperature where a change thereof is not felt by a human or is accepted by a human.

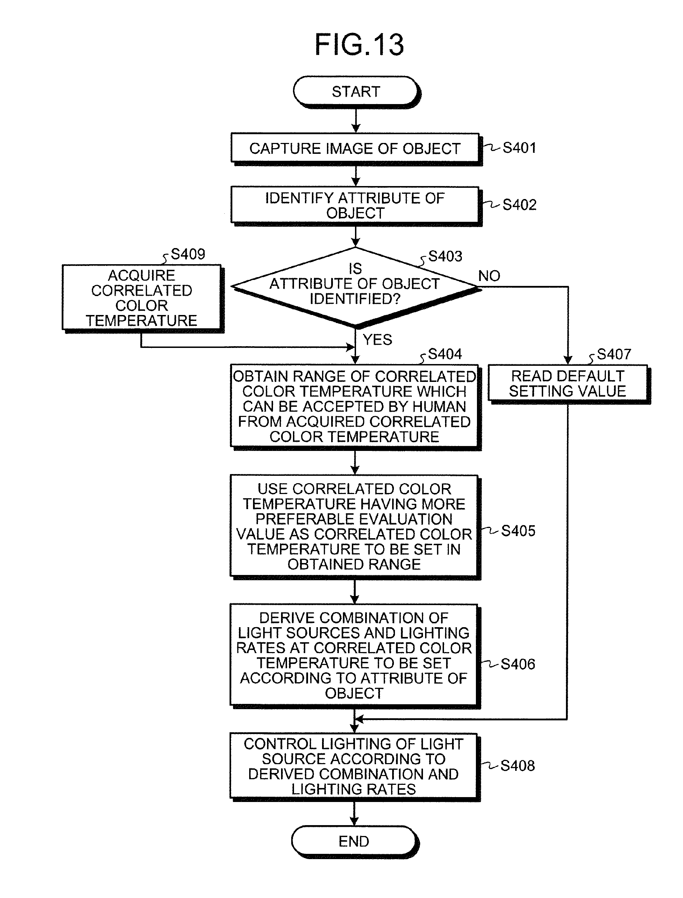

Next, a procedure of whole processes according to the fourth embodiment will be described with reference to FIG. 13. FIG. 13 is a flowchart illustrating an example of the procedure of whole processes according to the fourth embodiment.

As illustrated in FIG. 13, the image capturing unit 110 images an object illuminated by the light source 2 to generate image data (Step S401). The identification unit 120 extracts feature values of the object included in the image data generated by the image capturing unit 110 and acquires the attribute of the object corresponding to the extracted feature values with reference to the attribute identification dictionary to identify the attribute of the object (Step S402). In addition, the acquisition unit 450 acquires the correlated color temperature set by user's manipulation or set at a time interval (Step S409).

In the case where the attribute of the object is identified by the identification unit 120 (Yes in Step S403), the derivation unit 430 obtains the range of the correlated color temperature which can be accepted by a human from the correlated color temperature acquired by the acquisition unit 450 (Step S404). Next, the derivation unit 430 uses the correlated color temperature having more preferable evaluation value in the obtained range as the correlated color temperature which be set (Step S405). Subsequently, the derivation unit 430 derives the combination and the lighting rates of the light sources 2 at the correlated color temperature which be set according to the attribute of the object identified by the identification unit 120 (Step S406).

On the other hand, in the case where the attribute of the object is not identified by the identification unit 120 (No in Step S403), the derivation unit 430 reads a default setting value (Step S407). Next, the lighting control unit 140 controls light of the light source 2 according to the combination and lighting rates derived by the derivation unit 430 (Step S408).

In the embodiment, recognition of the object illuminated with light by the light source 2 is performed, and with respect to the correlated color temperature of the illumination on the recognized object, the correlated color temperature having more preferable evaluation value is used as the correlated color temperature which be set within the range of the correlated color temperature which can be accepted by a human. As a result, according to the embodiment, when the correlated color temperature is designated, the light by which the object is shown to a user to be preferable can be illuminated from the light source 2.

In addition, in the embodiment, if the illuminated object is not identified by the identification unit 120, the light of the light source 2 is controlled based on the combination and the lighting rates of the light sources 2 in which the general color rendering index Ra or the color Gamut area ratio Ga is very appropriately adjusted. As a result, according to the embodiment, the light source 2 can illuminate the object (unidentifiable object), of which a preferred color range reproduced is not stored, with light within a range where the object is shown not to be too much vivid.

Fifth Embodiment

Although the embodiments of the control apparatus and the illumination apparatus are described hereinbefore, various different forms may be employed besides the above-described embodiments. Therefore, with respect to (1) the derivation of combination and lighting rate of light sources, (2) the use of color information, (3) the identification of object, (4) the priority, (5) the range of correlated color temperature, (6) the designation of object, (7) the existence of light different from the light source, and (8) the configuration, other embodiments will be described.

(1) Derivation of Combination and Lighting Rate of Light Sources

In the above-described embodiments, the example where the selectable spectral power distribution is obtained based on the spectral power distribution of the light beams constituting combinable lights, the spectral reflectance of the object, and the tristimulus values and the combination and the lighting rates of the light sources 2 in this case is derived is described. Other methods may be performed to derive the combination and the lighting rates of the light sources 2.

For example, the derivation unit 130 obtains the combination and the lighting rates of the light sources 2 corresponding to the attribute of the object identified by the identification unit 120 from the storage unit 101 which stores the combination and the lighting rates of the light sources 2 corresponding to the attribute of the object. Next, the derivation unit 130 outputs the obtained combination and lighting rates to the lighting control unit 140.

In addition, for example, the derivation unit 330 obtains average values in approximated curves (refer to FIG. 2) of evaluation values with respect to the plurality of objects to derive the combination and lighting rates. In other words, in the case where the spectrum obtained by calculating the logical sum is not included within a preferred color range, the derivation unit 330 calculates average values of the evaluation values in the approximated curves of the attributes of the objects to derive the corresponding combination and lighting rates.

(2) Use of Information on Color

In the above-described embodiment, the example where the combination and lighting rates are derived according to the attributes of the illuminated objects is described. In the embodiment, the combination and lighting rates may be derived by using information on the colors corresponding to the attributes of the objects. In this case, the storage unit 101 is used to store the information on the colors corresponding to the attributes of the objects and the information of the colors corresponding to the attributes of the objects having chroma of which evaluation value is equal to or larger than a predetermined evaluation value. In addition, the information on color is an example of the spectral reflectance or the colorimetric value.

For example, the derivation unit 130 compares the information on the color of the object included in the image data generated by image capturing unit 110 with the information on the color corresponding to the attribute of the object stored in the storage unit 101 to derive the combination and lighting rates for compensating for a difference between the colors. The color imaged by the image capturing unit 110 may be in correspondence to the tristimulus values X, Y, and Z through matrix calculation or a lookup table. Since the spectral reflectance used in the embodiment is a representative spectral reflectance of an object, the spectral reflectance used in the embodiment may be different from real spectral reflectance. In the case where the difference from the real spectral reflectance is large, tristimulus values may not be reproduced within a defined color range.

In this case, the difference between the color which is to be imaged by the image capturing unit 110 and the color reproduced is calculated, and the combination and lighting rates are adjusted so that the component corresponding to the difference can be compensated for. For example, in the case where red light is stronger than the assumed color and is vividly reproduced, the lighting rate of the red light turns down. In this manner, in the light of the lights controlled based on the combination and lighting rate of the lights according to the attribute of the object, the information of the color of the real object is fed back to be added, so that the light source 2 can illuminate with the lights which show the object preferably by the user according to the change of the object. For example, in the case of a fruit, if the fruit too ripens and the light is controlled according to the attribute, the object which becomes too much vivid is compensated for. In addition, in the case where a fruit does not ripen, the same control is also performed.

(3) Identification of Object

In the above-described embodiments, the case where feature values such as edge, a gradient histogram, and a color histogram is extracted from image data in order to identify an object is described. In the identification of the object, the object may be identified based on predetermined identification information. For example, the identification unit 120 identifies an object corresponding to a barcode, a two-dimensional code, a QR code (registered trade mark), digital water mark, or the like which can be in correspondence to the illuminated object and identifies the attribute corresponding to the identified object. With respect to the identification information, data for identification is stored in the storage unit 101.

(4) Priority

In the above-described embodiments, the case where the combination and lighting rates of the light sources 2 are derived by adjusting the intensities of the output light beams according to the priorities corresponding to the attributes of the plurality of the objects is described. In the priorities may be determined as follows. In other words, although the priorities may be arbitrarily determined, for example, in the case where the color of an object which is memorized by a human is separated from the color of the real object, the priority thereof may be set to be high. The color of the object which is memorized by a human may be the above-described memory color.

In addition, the priorities may correspond to, for example, the sizes of the objects in the image data thereof. For example, the derivation unit 330 allocates high priority to a large object according to the priorities corresponding to the sizes of the plurality of the objects in the image data thereof and adjusts the intensities of the output lights with respect to the attribute of the object to derive the combination and the lighting rates of the light sources 2. In addition, the size of the object in the image data is expressed by using a pixel ratio.

(5) Range of Correlated Color Temperature

In the above-described embodiment, the case where the correlated color temperature having more preferable evaluation value is used as the correlated color temperature which be set within the range of the correlated color temperature which can be accepted by a human is described. The range of the correlated color temperature may be changed by the environment using illumination. Namely, in FIG. 12, although an example of the range of the correlated color temperature is described, since the range of the correlated color temperature is varied according to the situation of human's observation of the object, the range of the correlated color temperature is allowed to be changed according to the environment where a human observes the object. For example, the range of the correlated color temperature is allowed to be changed according to a time zone or a required brightness (luminance).

(6) Designation of Object

In the above-described embodiment, the case where the object included in the captured image data is identified is described. In the identification of object, an object designated by a user may be identified. For example, the user designates an object as an illumination object by using an input device such as a remote controller and a touch panel. In the case of using a touch panel, a range where the object as an illumination object is displayed may be selected from the captured image of a plurality of objects by the user, and the objects displayed in the selected range may be recognized by the identification unit. In addition, a plurality of imaged objects are recognized from the captured image, and the recognized objects are indicated by character strings. At least one of the character strings indicating the objects may be selected by the user.

(7) Existence of Light Different From Light Source

In the above-described embodiment, the case where the image data obtained by capturing an image of the object illuminated by the light source 2 is used is described. The image data in use may be image data obtained by capturing the image in the state where the light source 2 cannot shine. In the case where light (for example, external light) different from the light source 2 exists, there is a possibility that light of unintended color is reproduced due to superposition of the light illuminated by the light source 2 and the external light. At this time, since the object is illuminated with the external light, image data may be acquired by image capturing in the state where the light source 2 cannot shine. For example, a difference between an image captured in the situation where the external light or the like exists and an image captured under predetermined light is estimated as an offset of the external light. At this time, in the case where the illuminated object is specified, more accurate offset of the external light can be estimated. In addition, the light calculated in the derivation unit is adjusted by performing feedback of the estimated offset of the external light, so that the combination and lighting rate of lights of the light source 2 can be controlled at higher accuracy.

(8) Configuration

In addition, information including a process procedure, a control procedure, specific terminologies, various data, various parameters, and the like written in the above-described document or illustrated in the drawings may be arbitrarily changed except for the case where the information is particularly written. For example, as described above, the information stored in the storage unit 101 may be arbitrarily changed according the use thereof. In addition, the illustrated components of the control apparatus and illumination apparatus are conceptual ones, and thus, it is not necessary to configure the components with the same physical configuration as illustrated ones. In other words, distributive or collective specific forms of the apparatus is not limited to the illustrated ones, but the entire thereof or a unit thereof may be distributively or collectively configured with arbitrary units in terms of functions or physical configurations according to various burdens, use situations, or the like. For example, the lighting control unit 140 and the light source 2 may be integrated as a "light source unit" which allows the light source to output lights according to the combination and the lighting rates of the light sources 2 that are derived by the derivation unit 130.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A control apparatus (100; 200; 300; 400) comprising:

   an identification unit (120; 220; 320) configured to identify an attribute of an object included in image data; and
   a derivation unit (130; 230; 330; 430) configured to derive a combination of at least two types of light sources (2; 2a) and lighting rates of the light sources (2; 2a), based on the identified attribute of the object, the light sources (2; 2a) having different spectral power distributions.

2. The apparatus (100; 200; 300; 400) according to claim 1, wherein when the attribute of the object is identified by the identification unit (120; 220; 320), the derivation unit (130; 230; 330; 430) derives the combination and the lighting rates so that a colorimetric value of the object illuminated by the light sources (2; 2a) is included within a predetermined range.

3. The apparatus (100; 200; 300; 400) according to claim 1 or 2, wherein the derivation unit (130; 230; 330; 430) derives a pre-set combination of light sources (2; 2a) and lighting rates of the light sources (2; 2a) with respect to the object of which attribute is not identified by the identification unit (120; 220; 320).

4. The apparatus (100; 200; 300; 400) according to any one of claims 1 to 3, wherein the identification unit (120; 220; 320) identifies the attribute of an object having a memory color that represents a color memorized by a human in association with a well-known object, the memory color having a possibility that the memory color is different from a color of a real object.

5. The apparatus (100; 200; 300; 400) according to any one of claims 1 to 4, wherein the derivation unit (130; 230; 330; 430) derives the combination and the lighting rates by using at least one of a spectral reflectance corresponding to the attribute of the object and a colorimetric value so that the color of the object is included in a predetermined color range of reproduced colors when the object is illuminated by the light sources (2; 2a).

6. The apparatus (100; 200; 300; 400) according to any one of claims 1 to 4, further comprising:

   a storage unit (101; 401) configured to store the combination and the lighting rates for the attribute of the object to be identified by the identification unit (120; 220; 320),
   wherein the derivation unit (130; 230; 330; 430) acquires the combination and the lighting rates for the identified attribute of the object from the storage unit (101; 401).

7. The apparatus (100; 200; 300; 400) according to any one of claims 1 to 5, further comprising:

   a storage unit (101; 401) configured to store information on a color indicating at least one of a spectral reflectance and a colorimetric value corresponding to the attribute of the object identified by the identification unit (120; 220; 320),
   wherein the derivation unit (130; 230; 330; 430) compares information of the color of the object included in the image data with the information on the color corresponding to the attribute of the object stored in the storage unit (101; 401) to derive a combination of lights and a lighting rate of the lights for compensating for a difference between the colors.

8. The apparatus (300) according to any one of claims 1 to 7, wherein
the identification unit (320) identifies attributes of a plurality of objects included in the image data, and
the derivation unit (330) obtains a logical sum of spectra representing distributions of intensity of light with respect to wavelength for the respective identified attributes of the objects so that the color of the objects is included in a predetermined color range of reproduced colors when the plurality of objects are illuminated by the light sources (2) to derive the combination and the lighting rates.

9. The apparatus (300) according to claim 8, wherein
the identification unit (320) identifies attributes of a plurality of objects included in the image data, and
the derivation unit (330) obtains a logical sum of spectra representing distributions of intensity of light with respect to wavelength for the respective identified attributes of the objects and adjusts intensities of the lights according to priorities of the respective identified attributes of the objects to derive the combination and the lighting rates.

10. The apparatus (300) according to claim 8, wherein
the identification unit (320) identifies attributes of a plurality of objects included in the image data, and
the derivation unit (330) obtains a logical sum of spectra representing distributions of intensity of light with respect to wavelength for the respective identified attributes of the objects and adjusts intensities of the lights according to priorities corresponding to sizes of the identified objects in the image data to derive the combination and the lighting rates.

11. The apparatus (300) according to claim 8, wherein
the identification unit (320) identifies attributes of a plurality of objects included in the image data, and
the derivation unit (330) obtains a logical sum of spectra representing distributions of intensity of light with respect to wavelength for the respective identified attributes of the objects and obtains average values in approximated curves of evaluation values with respect to colorimetric values of the identified objects to derive the combination and the lighting rates.

12. The apparatus (200; 300) according to any one of claims 1 to 7, wherein
the identification unit (220; 320) identifies attributes of a plurality of objects included in the image data, and
the derivation unit (230; 330) derives a combination of least two types of lights and lighting rates of the lights for each of the objects, based on the identified attribute of the corresponding object, the lights having different spectral power distributions, the objects being illuminated by a plurality of light sources (2; 2a), respectively.

13. The apparatus (100; 200; 300; 400) according to any one of claims 1 to 12, further comprising:

an image capturing unit (110) configured to capture an image of the object illuminated by the light sources (2; 2a) to generate the image data; and
a lighting control unit (140; 240) configured to control lighting of the light sources (2; 2a) according to the combination and the lighting rates derived by the derivation unit (130; 230; 330; 430).

14. The apparatus (400) according to claim 1, further comprising:

a storage unit (401) configured to store a correlated color temperature and an evaluation value of a colorimetric value of the object in correspondence to the attribute of the object; and
an acquisition unit (450) configured to acquire the correlated color temperature;
wherein the derivation unit (430) determines a correlated color temperature having an evaluation value which is equal to or larger than a predetermined value within a predetermined range including the acquired correlated color temperature by using the correlated color temperature and the evaluation value corresponding to the identified attribute and derives the combination and the lighting rates so that the color of the object is included in a predetermined color range of reproduced colors when the object is illuminated by the light sources (2) at the determined correlated color temperature.

15. An illumination apparatus (1; 1a; 1b; 1c) comprising:

a light source (2; 2a) configured to emit at least two types of lights having different spectral power distributions;
an image capturing unit (110) configured to capture an image of an object illuminated by the light source (2; 2a) to generate image data;
an identification unit (120; 220; 320) configured to identify an attribute of the object included in the image data generated by the image capturing unit;
a derivation unit (130; 230; 330; 430) configured to derive a combination of the lights and lighting rates of the lights based on the attribute of the object identified by the identification unit (120; 220; 320); and
a lighting control unit configured to control lighting of the light source (2; 2a) according to the combination and the lighting rates derived by the derivation unit (130; 230; 330; 430).

# FIG.1

# FIG.2

# FIG.3

START

CAPTURE IMAGE OF OBJECT — S101

IDENTIFY ATTRIBUTE OF OBJECT — S102

HAS ATTRIBUTE OF OBJECT BEEN IDENTIFIED? — S103

NO → READ DEFAULT SETTING VALUE — S105

YES — S104

DERIVE COMBINATION OF LIGHT SOURCES AND LIGHTING RATES ACCORDING TO ATTRIBUTE OF OBJECT

CONTROL LIGHTING OF LIGHT SOURCE ACCORDING TO DERIVED COMBINATION AND LIGHTING RATES — S106

END

# FIG.4

1a

CONTROL APPARATUS — 200

2a

IMAGE CAPTURING UNIT — 110

IDENTIFI-CATION UNIT — 220

DERIVA-TION UNIT — 230

LIGHTING CONTROL UNIT — 240

STORAGE UNIT — 101

LIGHT SOURCE — 2a₁

LIGHT SOURCE — 2a₂

# FIG.5

# FIG.6

```
                    ┌──────────┐
                    │  START   │
                    └────┬─────┘
                         │
                         ▼
        ┌───────────────────────────────┐
        │   CAPTURE IMAGE OF OBJECT      │─── S201
        └───────────────┬───────────────┘
                        │
                        ▼
        ┌───────────────────────────────┐
        │   IDENTIFY ATTRIBUTE OF EACH   │─── S202
        │            OBJECT              │
        └───────────────┬───────────────┘
                        │
                        ▼       S203
                    ╱─────────╲
                   ╱    HAS     ╲
                  ╱ ATTRIBUTE OF ╲      NO
                 ╱  OBJECT BEEN   ╲───────────────┐
                 ╲  IDENTIFIED?   ╱                │
                  ╲             ╱                  │
                   ╲───────────╱                   │
                        │ YES                       │
                        │    S204                   │   S205
        ┌───────────────────────────────┐  ┌─────────────────────────────┐
        │   DERIVE COMBINATION OF        │  │  READ DEFAULT SETTING VALUE │
        │ LIGHT SOURCES AND LIGHTING     │  └──────────────┬──────────────┘
        │   RATE ACCORDING TO            │                 │
        │ ATTRIBUTE OF EACH OBJECT       │                 │
        └───────────────┬───────────────┘                 │
                        │◄────────────────────────────────┘
                        ▼
        ┌───────────────────────────────┐
        │  CONTROL LIGHTING OF LIGHT     │
        │ SOURCE CORRESPONDING TO        │
        │ POSITION OF EACH OBJECT        │─── S206
        │ ACCORDING TO DERIVED           │
        │ COMBINATION AND LIGHTING       │
        │            RATE                │
        └───────────────┬───────────────┘
                        │
                        ▼
                    ┌──────────┐
                    │   END    │
                    └──────────┘
```

# FIG.7

1b

300

CONTROL APPARATUS

| 110 | 320 | 330 | 140 |
|---|---|---|---|
| IMAGE CAPTURING UNIT | IDENTIFI-CATION UNIT | DERIVA-TION UNIT | LIGHTING CONTROL UNIT |

2

LIGHT SOURCE

101

STORAGE UNIT

# FIG.8A

# FIG.8B

# FIG.8C

# FIG.9

START

CAPTURE IMAGE OF OBJECT —S301

IDENTIFY ATTRIBUTE OF EACH OBJECT —S302

OBTAIN LOGICAL SUM OF SPECTRA CORRESPONDING TO ATTRIBUTE OF EACH OBJECT —S303

S304
IS IT INCLUDED WITHIN PREFERRED COLOR RANGE? — YES

NO

S305
ADJUST INTENSITY ACCORDING TO PRIORITY TO DERIVE COMBINATION OF LIGHT SOURCES AND LIGHTING RATES

S306
DERIVE COMBINATION AND LIGHTING RATES OF LIGHT SOURCES BASED ON LOGICAL SUM OF SPECTRA

CONTROL LIGHTING OF LIGHT SOURCE ACCORDING TO DERIVED COMBINATION AND LIGHTING RATES —S307

END

# FIG.10

1c

CONTROL APPARATUS  400

```
                   ACQUI-
                   SITION     450
                   UNIT

110        120              430          140           2
IMAGE      IDENTIFI-        DERIVATION   LIGHTING      LIGHT
CAPTURING  CATION           UNIT         CONTROL       SOURCE
UNIT       UNIT                          UNIT

                   STORAGE   401
                   UNIT
```

# FIG.11

PREFERRED

NOT PREFERRED

CHROMA

# FIG.12

J

DESIGNATED COLOR

RANGE WHERE DIFFERENCE
IN COLOR IS NOT ALMOST
PERCEIVED BY HUMAN

RANGE WHERE COLOR CAN
BE ACCEPTED AS THE
SAME COLOR BY HUMAN

$b_M$

$a_M$

# FIG.13

START

CAPTURE IMAGE OF OBJECT ∽S401

IDENTIFY ATTRIBUTE OF OBJECT ∽S402

S409
ACQUIRE CORRELATED COLOR TEMPERATURE

S403
IS ATTRIBUTE OF OBJECT IDENTIFIED? — NO

YES

S404
OBTAIN RANGE OF CORRELATED COLOR TEMPERATURE WHICH CAN BE ACCEPTED BY HUMAN FROM ACQUIRED CORRELATED COLOR TEMPERATURE

S407
READ DEFAULT SETTING VALUE

USE CORRELATED COLOR TEMPERATURE HAVING MORE PREFERABLE EVALUATION VALUE AS CORRELATED COLOR TEMPERATURE TO BE SET IN OBTAINED RANGE ∽S405

DERIVE COMBINATION OF LIGHT SOURCES AND LIGHTING RATES AT CORRELATED COLOR TEMPERATURE TO BE SET ACCORDING TO ATTRIBUTE OF OBJECT ∽S406

CONTROL LIGHTING OF LIGHT SOURCE ACCORDING TO DERIVED COMBINATION AND LIGHTING RATES ∽S408

END

Europäisches
Patentamt

European
Patent Office

Office européen
des brevets

# EUROPEAN SEARCH REPORT

Application Number

EP 13 18 1484

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | WO 2009/041171 A1 (TOSHIBA LIGHTING & TECHNOLOGY [JP]; ISHIWATA TOMOKO [JP]) 2 April 2009 (2009-04-02)<br>* paragraph [0002] *<br>* paragraph [0007] - paragraph [0008] *<br>* paragraph [0009] *<br>* paragraph [0038] - paragraph [0049]; figure 1 *<br>* paragraph [0040] *<br>* paragraph [0044]; figure 2c *<br>----- | 1-3,5-15<br><br><br>4 | INV.<br>H05B33/08<br>H05B37/02 |
| X | JP 2008 264430 A (MATSUSHITA ELECTRIC WORKS LTD) 6 November 2008 (2008-11-06)<br>* paragraph [0013] *<br>* paragraph [0017]; figure 4 *<br>* paragraph [0020] *<br>* paragraph [0023] *<br>----- | 1-3,5-7, 13-15 | |
| Y | US 2008/012722 A1 (MOSELEY DON A [US]) 17 January 2008 (2008-01-17)<br>* paragraph [0025] - paragraph [0026] *<br>----- | 4 | TECHNICAL FIELDS SEARCHED (IPC) |
| Y | JP 2008 270089 A (MATSUSHITA ELECTRIC WORKS LTD) 6 November 2008 (2008-11-06)<br>* paragraph [0014] *<br>----- | 4 | H05B |

The present search report has been drawn up for all claims

| Place of search | Date of completion of the search | Examiner |
|---|---|---|
| The Hague | 4 February 2014 | Benedetti, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 13 18 1484

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2014

| Patent document cited in search report | Publication date | Patent family member(s) | Publication date |
|---|---|---|---|
| WO 2009041171 A1 | 02-04-2009 | NONE | |
| JP 2008264430 A | 06-11-2008 | NONE | |
| US 2008012722 A1 | 17-01-2008 | NONE | |
| JP 2008270089 A | 06-11-2008 | JP 4990017 B2<br>JP 2008270089 A | 01-08-2012<br>06-11-2008 |

EPO FORM P0459